Europäisches Patentamt

**European Patent Office**

**Office européen des brevets**

(11) Publication number: **0 040 385**
A2

(12) # EUROPEAN PATENT APPLICATION

(21) Application number: **81103591.4**

(51) Int. Cl.³: **A 01 C 7/00**

(22) Date of filing: **11.05.81**

(30) Priority: **20.05.80 US 151662**

(43) Date of publication of application:
**25.11.81 Bulletin 81/47**

(84) Designated Contracting States:
**BE DE FR GB IT**

(71) Applicant: **Hilmer, Elwyn P.**
**P. O. Box 457 975 Newport**
**Bandon Oregon 97411(US)**

(72) Inventor: **Hilmer, Elwyn P.**
**P. O. Box 457 975 Newport**
**Bandon Oregon 97411(US)**

(74) Representative: **Modiano, Guido et al,**
**MODIANO & ASSOCIATI S.A.S. Via Meravigli, 16**
**I-20123 Milan(IT)**

(54) **Method of and apparatus for interrow cropping.**

(57) The invention includes a process machine planting a first crop of a top-end harvested plant in rows at full stand density, while grouping the rows in clusters. The rows are spaced apart from each other in the clusters and there are gaps between the clusters which are wider than the spaces between the rows in each cluster. When the first crop is well on its way to maturity, a full stand of a second crop is planted by machine in the gaps. After that, the first crop is top-end harvested at its maturity, without cutting off the tops of the second crop.

FIG. 1

PRIOR ART — ONE CROP PLANTING –100%STAND

NEW METHOD – 100%STAND

PRIOR ART – USING BLANKING – 68%STAND

This invention relates to a method of and apparatus for interrow cropping.

The background and the problems for which this invention provides solutions will be best understood from the following description of preferred embodiments.

The solutions of such problems are outlined in the appended claims.

The description which follows takes reference to the drawings, in which:

Figure 1 is a diagrammatic view in elevation of three first crop planting schemes, including two prior art systems and a system embodying the principles of the present invention;

Figure 2 is a view in rear elevation of a grain drill embodying the principles of the present invention and which is used for planting the first crop, grain being only one example;

Figure 3 is a top plan view of the machine of Figure 2. A disk marker at one side is shown broken in the middle to conserve space;

Figure 4 is an enlarged fragmentary view of a portion of Figure 2;

Figure 5 is a      view in side elevation of the machine of Figures 2 and 3 with portions broken away to disclose other parts;

Figure 6 is a top plan view of an interplanter embodying the principles of the invention;

Figure 7 is a view in rear elevation of the interplanter of Figure 6; and

Figure 8 is a view in side elevation of the interplanter of Figures 6 and 7.

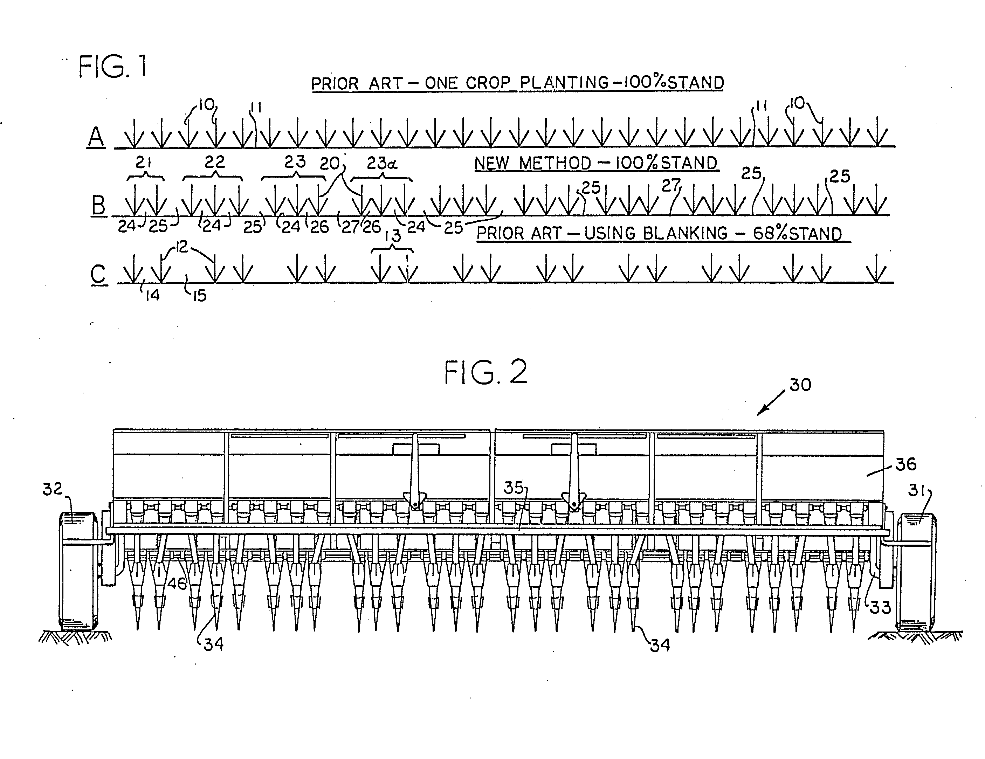

Figure 1 shows two prior art planting methods, one at the top and one at the bottom, with the method of the present invention in the middle.

The top row A shows conventional one crop planting of a conventional full stand. Plants 10 are evenly spaced so that all spaces 11 between the plants 10 are of identical width. Each space 11 may, for example, be six inches (15.24 cm) or may be seven inches (17.78 cm) or may be any other suitable distance. If a second crop is to be interplanted, this system of row A is disadvantageous as evenly spaced rows do not leave adequate room for a second crop to be planted and prosper. There is no differentiating or guide space enabling an operator to drive the tractor for the second crop planting without interfering with the first crop.

The bottom row C of Figure 1 shows such a prior art system where rows are not seeded. Plants 12 are spaced apart in clusters 13 of two plants 12 each, and with spaces 14 between the two rows of the same cluster and with gaps 15 in between successive clusters 13. This planting pattern is achieved by blanking out every third seed drop. If the spaces 13 are six inches (15.24 cm) each, then the spaces 15 are twelve inches (30.48 cm). This prior art system allows for adequate space for the wheels of the tractor and interplanter but makes no differentiation in the types of rows so that it does not produce any guide row for the operator to follow. A worse result, and more significant, is that the first crop is no longer planted as a full stand, there are only about two-thirds as many plants as formerly, nearly one-third of the first crop having been sacrificed to provide the spacing for planting the second crop. Moreover, the spaces 15 are wider than are really necessary and are, in fact, so wide that they encourage weed growth. Furthermore, the cluster rows and gaps are not symmetrical in the swath.

The center row B of Figure 1 illustrates the principles of the present invention. Plants 20 are grouped in clusters 21, 22 and 23 and with a predetermined uneven spacing. This grouping and spacing is obtained by the use of a machine preferably having disc opener units laterally adjusting the seeding units in clusters.

The system of row B utilizes clusters to provide a full stand of the first crop as there are just as many plants of the first crop as there were in the top row A with its even spacing. Thus, the two plants 20 in the two outside row clusters 21 may be separated by a space 24 five inches (12.70 cm) apart, the three plants (i.e., rows) in each cluster 22 may also be five inches (12.70 cm) apart. Between each cluster 21 and its adjacent cluster 22 is a gap 25 of eight inches (20.32 cm) and a gap 25 of eight inches (20.32 cm) separates those clusters 22 from the next inside cluster 23. In the cluster 23, there is an uneven spacing with the first two rows (moving toward the center) being separated by a five inch (12.70 cm) space 24 and the next two rows being separated by a space 26 of only four inches (10.16 cm). This is followed by a succeeding cluster 23a that has its first two rows (moving in toward the center) separated by a four inch (10.16 cm) space 26 and the next two rows by a five inch (12.70 cm) space 24. The purpose is to take an extra inch (2.54 cm) from each of these clusters 23 and 23a in order to provide an oversize gap 27 of ten inches (25.40 cm) for use as a wheel track gap and as a tracking or guide gap. The gap 27 gives extra room to accommodate the wheels and also provides a visibly wider gap 27 for the needed operator guidance. There may be only one of these ten inch (25.40 cm) gaps 27 per machine pass, but the provision of two such gaps 27 per pass is generally preferred and is illustrated. There may, of course, be more but the guidance feature is best carried out when there is either one but two. The spaces 24 and 26 between rows in a cluster may be adjusted to be the same width, a uniform width, if desired, so long as the wider spaces 25 and 27 between clusters are thereby accommodated.

Thus, the spaces 24 and 26 between rows in each cluster 21, 22, 23 and 23a vary in the crop shown (solely by way of example) in Figure 1, row B from five inches (12.70 cm) down to four inches (10.16 cm). Since there is extra space at the outer side of each cluster 21, 22, 23 or 23a, this does not crowd the crop and yields are obtained equal to that obtained where there is a uniform six inch (15.24 cm) spacing 11 as in Figure 1, row A, and row B produces a one hundred percent stand of the first crop instead of a sixty-seven or sixty-eight percent stand as in the blanking method of Figure 1, row C.

In comparison to prior art methods the gaps 25 and 27 are narrower than the gaps 15 so that there is considerably more shading and, therefore, a very significant reduction in the production of weeds. Yet there is sufficient space for planting of the second crop in each of gaps 25 and 27.

The second crop is planted, preferably, not only in the eight inch (20.32 cm) gaps 25 but also in the ten inch (25.40 cm) gaps 27 which also provide the wheel tracks.

The actual distances given and rows per cluster are for illustrative purposes only.

The time for planting the first crop is, preferably, as early as it can be planted safely. The second crop is planted in such a way that it will be the least impeded by the first crop and will least impede the harvesting of the first crop. Since the first crop is to be top-end harvested, that means that the second crop should be planted at such a time that it will not grow up to the height of the top-end portion of the first crop before that first crop is harvested. Thus, the time of planting should, of course, be prior to harvest and late enough so that there will not be competition between the crops.

I have found that the best time for planting the second crop is when the first crop is approaching maturity and where the seeds from the second crop can emerge at about the same time as the wilting of the sheathing leaves (for grain) or other appropriate indices of maturity, appear in the first crop. For wheat, this wilting is the best time and I refer to this best system here as a wilt-emerge system, meaning that the second crop emerges when the sheathing leaves of the first crop begin to wilt. This gives the second crop a chance to grow up to where it will be in good condition at the time that the first crop is harvested. The first crop may be harvested by combines in which the wheels go right down the row clusters of the first crop and therefore do not tread on the second crop rows. The harvesting being top-end harvesting and the second crop still being lower than the bottom of this top end, there is no interference whatever by the harvesting itself.

The apparatus of my invention enables the use of a type of localized tilling in what is otherwise a no-till system. The term "no-till" refers to the absence of tilling the ground for the second crop in a way that would damage the first crop.

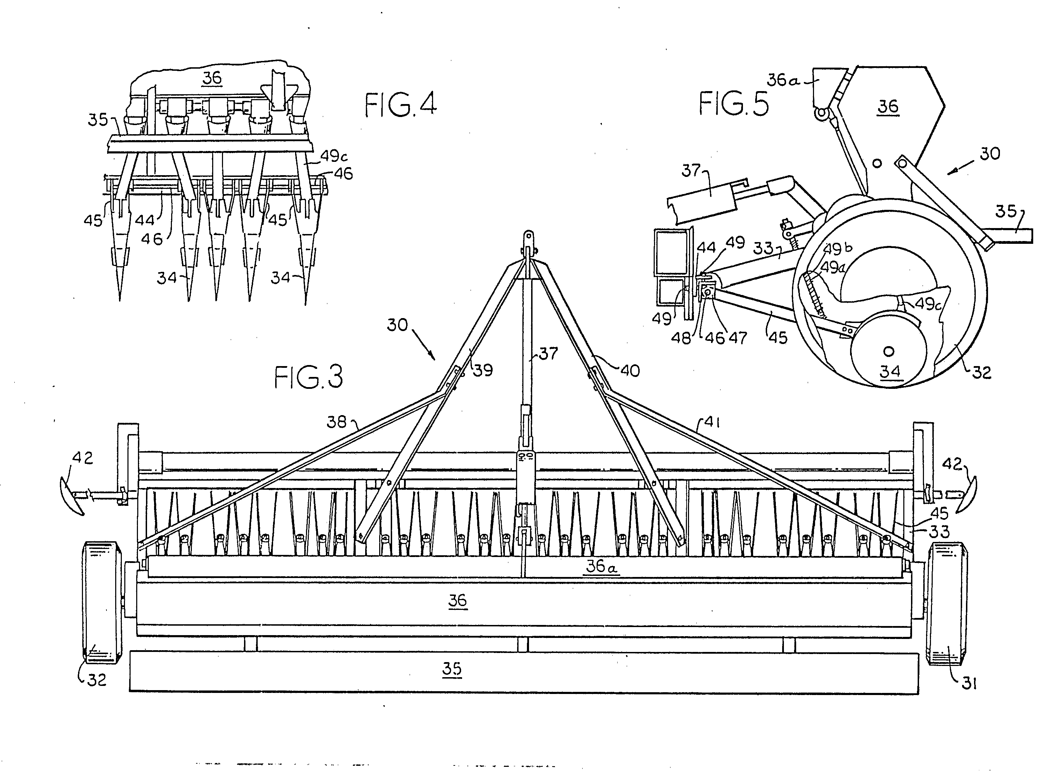

A First Crop Gap Row Grain Drill 30 (Figures 2-5)

Throughout this application wheat or other small grain crops are used (as an example only) of the first crop. The first crop may be some other top-end harvested crop such as sunflower or corn, and reference to wheat is not intended in any way to limit the invention to one particular type of first crop.

Winter wheat or spring wheat may be sown at the appropriate time by the use of a grain drill planter 30 which differs very little from the conventional grain drill planters but those differences are very important.

Thus, wheels 31 and 32 may support a narrow frame 33 on which are mounted the desired apparatus. These primarily include a series of disc openers 34. (For other than grain crops, unit planters or other suitable sowers may be used.) There may be a rear board 35 on which the operator may stand while refilling a grain seed hopper 36 for the disc openers 34 (and also a grass seed hopper 36a) and there is a draw bar 37 for connection to the conventional tractor (not shown) with bars 38, 39, 40 and 41 going to various parts of the frame 33 for reinforcement thereof. At each side there may be pivoted a conventional disc marker 42 which provides a furrow at a distance from the frame 33 of exactly half the width of the frame 33 so that the tractor operator may follow this furrow when planting the succeeding round or swath.

The real difference in the present invention is that its disc openers 34 are dispersed at uneven distances, preferably in an adjustable manner, along with an angle iron or bar 44 which is part of the frame 33. Brackets 45 support the discs 34 and are pivotally mounted to a transverse rod 46, which is part of the frame 33. The brackets 45 are also movable transversely and, when properly positioned, are each held in place by a pair of keeper members 47 that are secured to a second angle iron member 48, which, in turn, is secured as by bolts 49 to the angle iron or bar 44. Thus, the discs 34 are (adjustably) held in place at desired spacings but can pivot up and down somewhat. Vertical support rods 49a for the disc 34 are loaded by springs 49b to urge the disc opener 34 down into the ground. If not made adjustable, the openers 34 are spaced at fixed intervals in a desired manner.

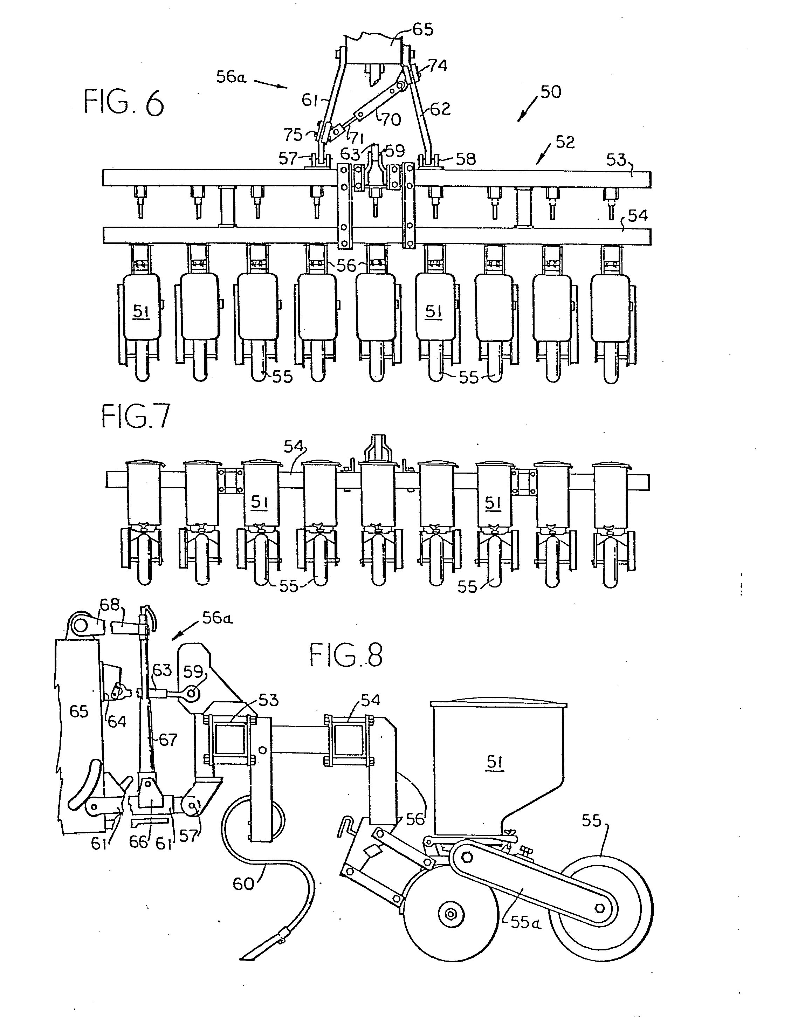

Figures 6 to 8 show an interplanter 50 for use in this invention. There are many similarities to conventional planters, for example, the interplanter 50 may employ conventional seed planting devices such as unit planters 51. (Other types of planters may be used when suitable, including grain drills.) However, there are also some important differences. The interplanter 50 illustrated may comprise a main frame 52 having two transverse tool bars 53 and 54. The device may be made with a single bar but the use of two bars 53 and 54 helps to distribute the load. The frame 52 is supported by press wheels 55 (and by the tractor, through a hitch). The wheels 55 are used to close the soil over on the seed. The unit planters 51 are mounted on a subframe 56 which lies behind the main frame 52. An important point is that the main frame 52 is attached by a three-point hitch 56a to the tractor, the three points 57, 58 and 59 preferably being adjustable, with two points 57 and 58 on the lower level and one point 59 thereabove. This provides a basically rigid and certain attachment. A key feature is that the planter frame bar 52 is located higher on the three hitch mounting points 57, 58 and 59 than is usual so that the tool bars 53 and 54 and other parts of the machine which cross over the first crop are generally higher than the first crop at this second planting time and bridge over it, with some bending of the grain.

The first bar 53 carries a series of Danish tines 60 which are in line with the unit planters 51 so as to provide a certain amount of tilling in this generally no-till system, the tilling being specifically limited to that for the interplanter's second crop and this localized tilling does not interfere with the first crop. The conventional Danish tines 60 may be used or other kinds of tines may be used, including rotating or power-driven tines. Coulters may be used instead of tines if desired.

The unit planters 51 include the press wheels 55 which drive the planting mechanism through a chain drive 55a. The wheels 55 are aligned with the Danish tines 60 and they may be evenly spaced apart in the rows at eighteen inch (45.72 cm) intervals, for example, or at other intervals matching the gaps provided by the planter for the first crop. There is no difference otherwise so far as the unit planters are concerned.

The interplanter thus tills the ground and plants the seed and firms it in at a good moisture depth, to enhance seed germination and plant emergence.

Each point 57, 58 and 59 of the three-point hitch includes a ball joint, as is conventional. To each ball joint is pivotally secured a linkage arm 61, 62 and 63 which is pivotally attached by another ball joint to a frame portion 64 of a tractor 65. The two lower linkage arms 61 and 62 have integral brackets 66 which are each secured pivotally to a telescoping vertical member 67 that is pivotally attached to an arm 68, which is used to raise and lower the hitch 56a.

The hitch system keeps the interplanter 50 normally aligned with the gaps 25 and 27 between row clusters of the first crop and the tractor wheels roll down the wheel track gaps 27. On sloping hillsides, the alignment might be lost. Therefore, I provide a special alignment mechanism, that includes a hydraulic cylinder 70 with a piston (not shown) and a connecting rod 71 that are secured across and to two lower bars 61 and 62 of the three-point hitch 56a at points 74 and 75. When the hydraulic cylinder 70 extends the rod 71 the interplanter 50 is moved to the left, relative to the tractor 65. When the cylinder 70 draws in the connecting rod 71, the interplanter 50 is moved to the right relative to the tractor 65. Thus, by operating the cylinder 70 the operator is able to control the alignment of the interplanter 50 relative to the tractor 65 on slopes and locate the interplanter 50 in its desired lateral position relative to the tractor 65.

The tractor is preferably provided with narrow load tires so that they can more readily be kept within the wheel gaps 27. Grain parting wheel guards are preferably provided to deflect gently plant portions from the gaps.

If desired, the interplanter 50 may be mid-tractor mounted on a two-point or three-point hitch.

Harvesting is carried on at any desired stage. "Crop maturity" means the multicrop seasonal maturity for the crop. The crop may be one which is fully ripe when harvested or may be one which is harvested green but as a crop it is then "mature". Windrowing may be used to hasten harvest of the second crop, if desired, with the windrow laid on top of the first crop stubble. The wheel widths on the windrower should be between the second crop rows.

The harvesting of the first crop is, as stated, top-end harvesting. All of it is done over the top of the second crop. The harvester's wheels (a combine is usually used) go over some rows of the first crop, straddling the second crop.

## CLAIMS

1. A method of interrow cropping, characterized by the steps of:

planting a first crop of a top-end harvested plant in rows at full stand density, while grouping the rows in clusters wherein the rows are spaced apart and there are gaps between clusters wider than the spaces between the rows in each cluster;

later, when said first crop is well on its way to maturity, planting a second crop in said gaps without substantially damaging said first crop;

top-end harvesting said first crop when it is ready for harvest without cutting off the top of said second crop; and

then growing said second crop to maturity and harvesting it.

2. A method according to Claim 1, including sizing said gaps during the planting of said first crop to a width such that as said first crop grows, it umbrellas over the gap and reduces weed growth therein over the full width thereof.

3. An interrow cropping system for planting two crops at full-stand density for each crop, characterized in that it comprises:

first planting means for sowing a first crop of a top-harvested plant in rows at full-stand density, said first planting means having a series of row planters spaced apart and grouped in clusters with gaps between clusters wider than the spaces between the planters in each cluster;

second planting means for sowing a second crop in said gaps at a time when said first crop is well on its way to maturity, said second planting means providing a high frame for passing generally over the top of said first crop, with individual seed planters suspended therefrom and spaced in accord with said gaps; and

top-end harvester means for harvesting said first crop at its maturity without cutting off the top of said second crop.

4. A system according to Claim 3, characterized in that said first planting means and said second planting means comprise planting machines of the same width, so that harvesting the grain table width is compatible with the planting and cultivating of said crops.

5. A system according to Claim 4, characterized in that said first planting means provides at least one said gap wider than the other gaps to provide a wheel and reference track gap;

said second machine using said reference gap for alignment therewith and for wheel tracks.

6. A system according to Claim 5, characterized in that said second machine includes means for tilling a narrow band of soil located just ahead of each individual seed planter thereof and a press wheel located just behind each said seed planter.

7. An apparatus for planting a small grain crop in a manner suitable for later intercropping, characterized in that it comprises:

a main, wheel-supported frame having transverse bar means;

a series of seed planters supported by said bar means and grouped in a series of clusters with the planters in each cluster spaced apart and with the clusters spaced apart from each other by a distance greater than that between rows in each cluster.

8. An apparatus according to Claim 7, characterized in that said seed planters are spaced to provide at least one track row gap of said row gaps of wider extent for second crop tilling and planting and as a guide to plant a second crop.

9. A method according to Claim 1, characterized in that the second crop is planted at full density and the harvesting and planting is completed without trampling of standing crops.

10. An interrow cropping system according to Claim 3, characterized in that a two or three point hitch connects the interrow cropping system to a power source with said two or three point hitch having high clearance to prevent first crop damage and press wheels for following in the gaps in said rows.

FIG. 1

PRIOR ART — ONE CROP PLANTING —100% STAND

NEW METHOD — 100% STAND

PRIOR ART — USING BLANKING — 68% STAND

FIG. 2

0040385

FIG.3

FIG.4

FIG.5

FIG. 6

FIG.7

FIG.8